# EUROPÄISCHE PATENTSCHRIFT

(11) **EP 0 431 423 B1**
(45) Veröffentlichungstag und Bekanntmachung des Hinweises auf die Patenterteilung: **22.02.1995**
(21) Anmeldenummer: 90122433.7
(22) Anmeldetag: 24.11.1990
(51) Int. Cl.: C08G 73/00, D06P 1/52

(54) **Basische Polykondensationsprodukte sowie deren Verwendung als Färbereihilfsmittel**
Basic polycondensation products as well as their use as dye additives
Produits de polycondensation basiques ainsi que leur utilisation comme additif de colorants

(30) Priorität: 07.12.1989 DE 3940481
(43) Veröffentlichungstag der Anmeldung: 12.06.1991
(73) Patentinhaber: BAYER AG, 51368 Leverkusen (DE)
(72) Erfinder: Hendricks, Udo, Dr., W-5068 Odenthal (DE)

(56) Entgegenhaltungen:
- DE-A- 855 001
- FR-A- 2 084 894
- FR-A- 2 343 859
- Chemicals Abstracts, vol.97, no.8, August 1982, Columbus, Ohio, USA Sanyo Chemicals:"Washfastness improving Agents for cellulosic Textiles" seite 62; Spalte 2, ref.no.57089T

## Beschreibung

Die vorliegende Erfindung betrifft wasserlösliche Polykondensationsprodukte, wie sie bei der Umsetzung von mehrfunktionellen Aminen und Cyanamid bzw. dessen Derivaten und Polymeren unter Abspaltung von Ammoniak erhalten werden.

Derartige Reaktionsprodukte sowie deren Verwendung zur Verbesserung der Echtheitseigenschaften von Färbungen mit substantiven Farbstoffen sind seit langem bekannt (vgl. DE-A-855 001).

Diese Produkte bzw. deren wasserlösliche Salze weisen jedoch den Nachteil auf, daß sie produktionsbedingt wasserunlösliche Nebenprodukte enthalten, die selbst keine echtheitsverbessernde Wirkung auf Textilfärbungen besitzen.

Es ist deshalb bereits vorgeschlagen worden (vgl. DE-A-2 112 878), diese unerwünschten Bestandteile aus den wäßrigen Lösungen der Färbereihilfsmittel durch Filtrieren oder Zentrifugieren abzutrennen.

Da sich jedoch diese Nebenprodukte, die beim Überführen der basischen Kondensationsprodukte in die Salzform durch Neutralisation mit geeigneten Säuren entstehen, in sehr feinteiliger Form abscheiden, bereitet deren Abtrennung erhebliche Schwierigkeiten.

Es wurde nun überraschenderweise gefunden, daß man unmittelbar gut wirksame, wasserlösliche Kondensationsprodukte erhält, und damit auf die aufwendige Abscheidung irgendwelcher Nebenprodukte verzichten kann, wenn man die Umsetzung der Amine mit den Cyanamiden in Gegenwart von Ammoniumsalzen durchführt.

Gegenstand der Erfindung sind somit wasserlösliche basische Polykondensationsprodukte, erhalten durch Umsetzung von
A) einem Amin der Formel 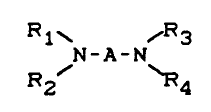 worin - unabhängig voneinander -
   - A: eine gegebenenfalls durch Heteroatome unterbrochene Alkylenkette und
   - R₁-R₄: Wasserstoff oder gegebenenfalls durch OH, CN oder O-C₁-C₄-Alkyl substituiertes Alkyl, bedeuten, wobei jedoch mindestens einer dieser Reste für Wasserstoff steht,
   mit
B) Cyanamid oder dessen Derivaten oder Polymeren im Molverhältnis A:B = 2:1 bis 1:2
   in Gegenwart von
C) 0,05-0,5 Mol eines Ammoniumsalzes, bezogen auf die molare Menge an B, bei Temperaturen von 80 bis 160°C in Gegenwart von nichtwäßrigen Lösemitteln sowie deren wasserlösliche Salze, die durch Neutralisation mit in der Färbereitechnik üblichen anorganischen oder organischen Säuren erhalten werden.
Bevorzugte Amine A sind solche der oben angegebenen Formel,
worin
- A: einen gegebenenfalls durch O, S, NH oder N-C₁-C₄-Alkyl unterbrochenen und/oder durch OH substituierten C₂-C₂₀-Alkylenrest und
R₁-R₄ C₁-C₄-Alkyl bedeuten.

Beispiele für geeignete polyfunktionelle Amine A sind 1,4-Butandiamin, 1,6-Hexandiamin, N-(2-Aminoethyl)-1,3-propandiamin, Dipropylentriamin, N,N-Bis-(2-aminopropyl)-methylamin, Polyethylenimine und insbesondere Polyethylenpolyamine wie Triethylentetramin, Tetraethylenpentamin, Pentaethylenhexamin und vorzugsweise Diethylentriamin.

Geeignete Komponenten B sind Cyanamid, Dicyandiamid, Guanidin und Biguanidin. Bevorzugt ist Dicyandiamid.

Geeignete Komponenten C sind Ammoniumsalze organischer oder anorganischer Säuren, wie z.B. Ammoniumchlorid, Ammoniumsulfat, Ammoniumcarbonat, Ammoniumformiat und Ammoniumacetat.

Die Umsetzung der Komponenten A mit B erfolgt im Molverhältnis 2:1 bis 1:2 in Gegenwart von 0,05 bis 0,5 Mol, vorzugsweise 0,1 bis 0,3 Mol, Ammoniumsalzen bei Temperaturen von 80 bis 160°C in Anwesenheit nichtwäßriger Lösemittel, vorzugsweise in Anwesenheit hydroxylgruppenhaltiger Lösemittel mit einem Siedepunkt oberhalb 180°C, unter Ammoniakabspaltung.

Als hydroxylgruppenhaltige Lösemittel kommen Ethylenglykol, 1,2- und 1,3-Propylenglykol, Butylenglykol, Di-, Tri- oder Tetraethylenglykol und deren Ether sowie Polyethylenglykole mit Molgewichten von 600 bis 5000 in Frage.

Durch Mitverwendung der hydroxylgruppenhaltigen Lösemittel wird die Rührbarkeit der Reaktionsmischung während der Kondensationsreaktion verbessert. Die Kondensationsreaktion wird im allgemeinen bis zur Beendigung der Ammoniakabspaltung durchgeführt oder nach Erreichen einer gewünschten Viskosität der Reaktionsmischung abgebrochen.

Die Reaktionsprodukte sind hochviskose Flüssigkeiten oder Feststoffe mit basischen Eigenschaften, die in Wasser klare Lösungen liefern; vorteilhaft werden sie durch Neutralisation mit anorganischen oder organischen Säuren, wie sie in der Färbetechnik üblich sind, in ihre wasserlöslichen Salze überführt. Bevorzugt sind Salzsäure und Essigsäure.

Die basischen Polykondensate oder ihre Salze werden zur Verbesserung der Naßechtheiten von gefärbtem oder bedrucktem Textilmaterial aus hydroxygruppen- oder aminogruppenhaltigen Fasern verwendet, insbesondere von Textilmaterial aus natürlicher oder regenerierter Cellulose, die mit Direkt- oder Reaktivfarbstoffen gefärbt ist. Das gefärbte Textilmaterial kann auch aus Fasergemischen natürlicher und synthetischer Fasern bestehen, z.B. aus Mischungen von Cellulose mit Polyester, Polyacrylnitril, Polyamid oder Wolle.

Zur Verbesserung der Naßechtheiten der gefärbten Textilien werden diese mit wäßrigen Flotten behandelt, die die basischen Polykondensate oder vorzugsweise ihre Salze mit anorganischen oder organischen Säuren enthalten. Die Menge an basischen Polykondensaten oder deren Salzen kann in weiten Grenzen schwanken. Im allgemeinen hat sich ein Zusatz von 0,1 bis 4 %, vorzugsweise von 0,5 bis 3 %, bezogen auf das Gewicht der Fasermaterialien, bewährt.

Die Nachbehandlung des gefärbten oder bedruckten Fasermaterials zur Verbesserung der Naßechtheit wird entweder im Ausziehverfahren durchgeführt, indem man das gefärbte oder bedruckte Material z.B. während 20 bis 30 Minuten in eine wäßrige Flotte einbringt, die die erfindungsgemäß zu verwendenden Polykondensate enthält und einen pH-Wert von z.B. 4 bis 8, vorzugsweise von 5,5 bis 6,5, und eine Temperatur von 20 bis 70°C aufweist, oder die zur Nachbehandlung dienende Flotte kontinuierlich, z.B. mittels eines Foulards, auf das gefärbte oder bedruckte Material aufbringt.

Geeignete Farbstoffe für die Herstellung der Färbungen und Drucke sind z.B. im Colour-Index, 3. Auflage (1971), Bd. 2 auf den Seiten 2005 bis 2478 als Direktfarbstoffe und auf den Seiten 1001 bis 1562 als saure Farbstoffe aufgeführt. Geeignete Reaktivfarbstoffe sind z.B. bei Venkataraman, The Chemistry of Synthetic Dyes, Volume VI, Reactive Dyes (Academic Press, New York, London 1972) beschrieben.

Mit Hilfe des erfindungsgemäßen Verfahrens werden die Farbausbeute und die Echtheitseigenschaften von Färbungen und Drucken, insbesondere die Schweiß-, Wasser- und Waschechtheiten, erheblich verbessert.

In den nachfolgenden Beispielen bedeuten "Teile" Gewichtsteile.

### Beispiel 1

277,2 Teile Dicyandiamid werden in 240 Teilen Diethylenglykol suspendiert und mit 309 Teilen Diethylentriamin vermischt, wobei die Temperatur auf ca, 40 bis 45°C ansteigt. 24 Teile Ammonchlorid werden zugesetzt, und die Mischung wird in 20 Minuten auf 110°C erhitzt, wobei ab 50°C Ammoniak-Entwicklung einsetzt. Das entweichende Ammoniak wird in einer Tiefkühlfalle aufgefangen. Das Reaktionsgemisch wird durch kontinuierliche Temperatursteigerung in 2 Stunden auf 150°C erhitzt und 60 Minuten bei 150°C gerührt. Die Ammoniak-Entwicklung hat dann fast vollständig aufgehört, es ist eine klare hochviskose Schmelze entstanden. Man läßt die Reaktionsmischung auf ca, 140°C abkühlen und läßt rasch 600 Teile Wasser einlaufen, wobei eine klare Lösung entsteht, die auf 40 bis 50°C abgekühlt wird, Mit 275 Teilen 36,5 %iger Salzsäure wird die Lösung unter Kühlung auf einen pH-Wert von 6,5 bis 7,0 eingestellt. Man erhält 1555 g einer klaren, hellgelben Lösung mit einem Trockengehalt von 49,5 %. (3 Stunden Trocknen im Vakuum bei 100°C). In der Tiefkühlfalle wurden 119,5 g Ammoniak aufgefangen.

Anstelle des Diethylenglykols können mit gleichem Ergebnis 240 Teile Propandiol-1,2 verwendet werden.

### Beispiel 2

92,4 Teile Dicyandiamid werden in 40 g Diethylenglykol suspendiert und mit 103 g Diethylentriamin vermischt. Dann werden 4 g Ammoniumchlorid zugesetzt und die Mischung in 20 Minuten auf 110°C erhitzt. In 2 Stunden wird auf 150°C erhitzt und 15 Minuten bei dieser Temperatur gerührt. Man läßt die zähe, klare Schmelze auf 140°C abkühlen und läßt rasch 300 Teile Wasser einlaufen, wobei eine klare Lösung entsteht, die auf 40 bis 50°C abgekühlt und durch Zusatz von 87 Teilen 36,5 %iger HCl auf einen pH-Wert von 6,5 bis 7,0 eingestellt wird. Man erhält 586 Teile einer klaren, gelblichen Lösung mit einem Trockengehalt von 39 % (Vakuum, 3 Stunden bei 100°C).

### Beispiel 3

92,4 Teile Dicyandiamid, 40 Teile Diethylenglykol, 103 Teile Diethylentriamin und 26,8 Teile Ammoniumchlorid werden, wie in Beispiel 2 beschrieben, miteinander umgesetzt. Nach 30 Minuten Rühren bei 50°C wird die zähe, klare Schmelze mit 200 Teilen Wasser gelöst, die Lösung auf 40 bis 50°C abgekühlt und mit 51 Teilen 36,5 %iger Salzsäure auf pH 6,5 bis 7,0 eingestellt. Man erhält 473 Teile einer klaren, rötlich-gelben Lösung mit einem Trockengehalt von 48,8 %.

### Beispiel 4

92,4 Teile Dicyandiamid wurden in 103 Teilen Diethylentriamin und 60 Teilen eines Polyethylenglykol-Gemischs mit einem mittleren Molgewicht von 370 suspendiert und mit 16 Teilen Ammonchlorid versetzt. Die Mischung wird in 20 Minuten auf 120°C und dann unter kontinuierlicher Temperatursteigerung in 2 Stunden auf 150°C erhitzt. Nach 30 Minuten Rühren bei 150°C wird die zähe, klare Schmelze mit 100 Teilen Wasser versetzt, gelöst, auf 50°C abgekühlt und mit 80 Teilen 36,5 %iger Salzsäure auf einen pH-Wert von 6,5 bis 7,0 eingestellt. Man erhält 412 Teile einer klaren bräunlichen Lösung mit einem Trockengehalt von 64,8 %.

### Beispiel 5

92,4 Teile Dicyandiamid, 103 Teile Diethylentriamin, 40 Teile Diethylenglykol und 14,4 Teile Ammoniumcarbonat werden in 20 Minuten auf 120°C und weiter in 2,5 Stunden auf 160°C erhitzt. Nach 15 Minuten Rühren bei 160°C wird die sehr viskose Schmelze mit 150 Teilen Wasser versetzt, gelöst, auf 50°C abgekühlt und mit 101 Teilen 36,5 %iger Salzsäure auf pH 6,5 bis 7,0 gestellt. Man erhält 455 Teile einer klaren gelblichen Lösung mit einem Trockengehalt von 54,3 %.

### Beispiel 6

Der Reaktionsansatz von Beispiel 5 wird wiederholt, nur werden an Stelle des Ammoniumcarbonats 11,6 Teile wasserfreies Ammoniumacetat verwendet. Nach 30 Minuten Rühren bei 150°C wird mit 150 Teilen Wasser gelöst und bei 50°C mit 104 Teilen 36,5 %iger Salzsäure auf einen pH-Wert von 6,5 bis 7,0 gestellt. Die klare Lösung besitzt einen Trockengehalt von 53,7 %.

Mit gleich gutem Erfolg können anstelle des Ammoniumacetats 9,5 Teile Ammoniumformiat eingesetzt werden.

### Beispiel 7

92,4 Teile Dicyandiamid, 103 Teile Diethylentriamin und 100 Teile eines Polyethylenglykols mit einem durchschnittlichen Molgewicht von 1550 und 16 Teile Ammoniumchlorid werden, wie in den vorangehenden Beispielen beschrieben, auf 150°C erhitzt und 15 Minuten bei dieser Temperatur gerührt. Man versetzt mit 150 Teilen Wasser, kühlt auf 40 bis 50°C ab und stellt mit 100 g 36,5 %iger Salzsäure auf pH 6,5 bis 7,0. Man erhält eine klare Lösung mit einem Trockengehalt von 56 %.

### Beispiel 8

92,4 Teile Dicyandiamid, 103 Teile Diethylentriamin, 40 Teile Diethylenglykol und 16 Teile Ammoniumchlorid werden auf 150°C erhitzt und 30 Minuten gerührt. Nach dem Lösen in 150 Teilen Wasser erhält man eine klare Lösung, die bei 40°C mit 80 Teilen 36,5 %iger Salzsäure neutralisiert wird. Man erhält eine klare Lösung mit einem Trockengehalt von 54,8 %.

### Vergleichsbeispiel

Ohne den Zusatz von Ammonchlorid werden analog Beispiel 9 92,4 Teile Dicyandiamid, 103 Teile Diethylentriamin und 40 Teile Diethylenglykol auf 150°C erhitzt und 30 Minuten bei dieser Temperatur gerührt. Nach der Lösung mit 150 Teilen Wasser erhält man eine trübe Lösung, die bei 40°C mit 120 Teilen 36,5 %iger Salzsäure neutralisiert wird. Die trübe Lösung wird filtriert, als Filterrückstand werden nach dem Trocknen 4,3 g eines weißen Pulvers erhalten. Das Filtrat besitzt einen Trockengehalt von 54,3 %.

### Beispiel 9

146 Teile Triethylentetramin, 117,6 Teile Dicyandiamid, 26,8 Teile Ammoniumchlorid und 40 Teile Diethylenglykol werden, wie in den vorhergehenden Beispielen beschrieben, auf 150°C erhitzt und 60 Minuten bei dieser Temperatur gerührt. Die viskose, klare Schmelze wird mit 150 Teilen Wasser gelöst, auf 40°C abgekühlt und mit 96 Teilen 36,5 %iger Salzsäure auf pH 6,5-7,0 gestellt. Man erhält eine klare Lösung mit einem Trockengehalt von 61 %.

### Anwendungsbeispiel 1:

Eine gespülte 3 %ige Ausziehfärbung auf Baumwolle, erhalten mit C.I. Direct Blue 98, wird 20 Minuten bei pH 6 im Flottenverhältnis 20:1 in einer wäßrigen Flotte behandelt, die 3,0 g/l des in Beispiel 1 beschriebenen Produktes enthält. Anschließend wird mit kaltem Wasser gespült und bei 100°C getrocknet. Die behandelte Färbung ist in ihrer Waschechtheit bei 60°C gegenüber einer unbehandelten Färbung deutlich verbessert.

### Anwendungsbeispiel 2:

Eine gespülte 3 %ige Ausziehfärbung auf Baumwolle, erhalten mit C.I. Direct Violet 47, wird auf einem Foulard bei 20°C mit einer wäßrigen Flotte imprägniert, die 30 g/l des in Beispiel 1 beschriebenen Produktes enthält und einen pH-Wert von 6 besitzt. Man quetscht auf eine Flottenaufnahme von 100 % ab und fixiert anschließend durch Erhitzen auf 150°C während 5 Minuten. Es resultiert eine Färbung mit deutlich verbesserter Waschechtheit bei der 60°C-Wäsche.

Ähnlich gute Ergebnisse erhält man bei der Anwendung der beschriebenen Produkte auf Färbungen mit C.I. Direkt Black 112.

## Patentansprüche

1. Basische Polykondensate, erhalten durch Umsetzung von
A) einen Amin der Formel 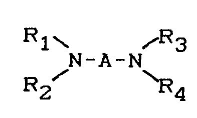 worin - unabhängig voneinander -
A eine gegebenenfalls durch Heteroatome unterbrochene Alkylenkette und
R₁-R₄ Wasserstoff oder gegebenenfalls durch OH, CN oder O-C₁-C₄-Alkyl substituiertes Alkyl, bedeuten, wobei jedoch mindestens einer dieser Reste für Wasserstoff steht,
mit
B) Cyanamid oder dessen Derivaten oder Polymeren im Molverhältnis A:B = 2:1 bis 1:2
in Gegenwart von
C) 0,05-0,5 Mol eines Ammoniumsalzes, bezogen auf die molare Menge an B, bei Temperaturen von 80 bis 160°C in Gegenwart von nichtwäßrigen Lösemitteln,
sowie deren wasserlösliche Salze, erhalten durch Neutralisation mit der Färbereitechnik üblichen anorganischen oder organischen Säuren.

2. Polykondensate nach Anspruch 1, dadurch gekennzeichnet, daß als Komponente A Diethylentriamin eingesetzt wird.

3. Polykondensate nach Anspruch 1, dadurch gekennzeichnet, daß als Komponente B Dicyandiamid eingesetzt wird.

4. Polykondensate nach Anspruch 1, dadurch gekennzeichnet, daß als Komponente C Ammoniumchlorid eingesetzt wird.

5. Polykondensate nach Anspruch 1, dadurch gekennzeichnet, daß 0,1 bis 0,3 Mol eines Ammoniumsalzes eingesetzt werden.

6. Polykondensate nach Anspruch 1, dadurch gekennzeichnet, daß durch Umsetzung in Gegenwart hydroxylgruppenhaltiger Lösemittel mit einem Siedepunkt oberhalb 180°C erhalten werden.

7. Verwendung der Polykondensate nach Anspruch 1 als Färbereihilfsmittel.

8. Verwendung der Polykondensate nach Anspruch 1 als Naßechtheitsverbesserungsmittel von Färbungen substantiver Farbstoffe auf Cellulosefasermaterialien.

## Claims

1. Basic polycondensation products obtained by reacting
A) an amine of the formula 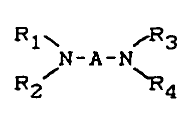 in which, independently of one another,
A denotes an alkylene chain which may be interrupted by hetero atoms and
R₁-R₄ denote hydrogen or unsubstituted or OH-, CN- or O-C₁-C₄-alkyl-substituted alkyl, but at least one of these radicals represents hydrogen,
with
B) cyanamide or derivatives or polymers thereof in an A/B molar ratio of 2:1 to 1:2
in the presence of
C) 0.05-0.5 mol of an ammonium salt, relative to the molar amount of B, at temperatures of 80 to 160°C in the presence of non-aqueous solvents, and water-soluble salts thereof obtained by neutralization with inorganic or organic acids customary in dyeing technology.

2. Polycondensation products according to Claim 1, characterized in that diethylenetriamine is used as component A.

3. Polycondensation products according to Claim 1, characterized in that dicyandiamide is used as component B.

4. Polycondensation products according to Claim 1, characterized in that ammonium chloride is used as component C.

5. Polycondensation products according to Claim 1, characterized in that 0.1 to 0.3 mol of an ammonium salt is used.

6. Polycondensation products according to Claim 1, characterized in that .... are obtained by reaction in the presence of hydroxyl-containing solvents having a boiling point above 180°C.

7. Use of the polycondensation products according to Claim 1 as dyeing assistants.

8. Use of the polycondensation products according to Claim 1 as agents for improving the wet fastness of dyeings obtained with direct dyestuffs on cellulose fibre materials.

## Revendications

1. Polycondensats basiques obtenus par la réaction de :
A) une amine de formule 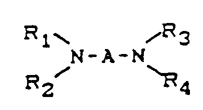 dans laquelle, indépendamment l'un de l'autre,
A représente une chaîne alkylène éventuellement interrompue par des hétéroatomes et
R₁-R₄ représentent chacun un atome d'hydrogène ou un groupe alkyle éventuellement substitué par OH, par CN ou par un groupe O-alkyle en C₁-C₄, l'un au moins de ces restes représentant un atome d'hydrogène,
avec
B) du cyanamide ou ses dérivés ou polymères, selon un rapport molaire de A : B = 2 : 1 à 1 : 2,
en présence de
C) 0,05 à 0,5 mol d'un sel d'ammonium, par rapport à la quantité molaire de B, à des températures de 80 à 160°C en présence de solvants non aqueux, ainsi que leurs sels hydrosolubles, obtenus par neutralisation avec les acides minéraux ou organiques usuels dans la technique de la teinture.

2. Polycondensats selon la revendication 1, caractérisés en ce qu'on utilise comme composant A la diéthylèntriamine.

3. Polycondensats selon la revendication 1, caractérisés en ce qu'on utilise comme composant B du dicyanodiamide.

4. Polycondensats selon la revendication 1, caractérisés en ce qu'on utilise comme composant C du chlorure d'ammonium.

5. Polycondensats selon la revendication 1, caractérisés en ce qu'on utilise 0,1 à 0,3 moi d'un sel d'ammonium.

6. Polycondensats selon la revendication 1, caractérisés en ce qu'ils sont obtenus par une réaction effectuée en présence de solvants contenant du groupe hydroxyle et ayant un point d'ébullition supérieur à 180°C.

7. Utilisation des polycondensats selon la revendication 1 comme adjuvants de teinture.

8. Utilisation des polycondensats selon la revendication 1, comme agent d'amélioration de la solidité au mouillé de teintures obtenues à l'aide de colorants substantifs sur des matières en fibres cellulosiques.
